# EUROPÄISCHE PATENTSCHRIFT

(11) **EP 0 529 045 B1**
(45) Veröffentlichungstag und Bekanntmachung des Hinweises auf die Patenterteilung: **17.01.1996**
(21) Anmeldenummer: 92906634.8
(22) Anmeldetag: 13.03.1992
(51) Int. Cl.: H02K 11/00

(54) **GESTEUERTER MOTOR**
CONTROLLED MOTOR
MOTEUR COMMANDE

(30) Priorität: 13.03.1991 DE 4108074
(43) Veröffentlichungstag der Anmeldung: 03.03.1993
(73) Patentinhaber: Heesemann, Jürgen, D-32547 Bad Oeynhausen (DE)
(72) Erfinder: Heesemann, Jürgen, D-32547 Bad Oeynhausen (DE)
(74) Vertreter: Lins, Edgar, Dipl.-Phys. Dr.jur.
(86) Internationale Anmeldenummer: DE9200211
(87) Internationale Veröffentlichungsnummer: WO9216993

(56) Entgegenhaltungen:
- EP-A- 0 355 255
- DE-A- 3 602 606
- DE-A- 3 642 726
- DE-A- 3 642 727
- US-A- 4 238 689
- US-A- 4 510 404
- US-A- 4 808 865
- US-A- 4 847 513
- PATENT ABSTRACTS OF JAPAN vol. 9, no. 305 (E-363)(2028) 3. Dezember 1985 & JP-A-60 141 148

## Beschreibung

Die Erfindung betrifft einen gesteuerten Motor mit einer Steuerung, die mit einer Prozessorstufe und Leistungssteuerelementen den Treiberstrom für die Motorwicklungen in Abhängigkeit von wenigstens einem der Steuerung zugeführten externen Befehlssignal generiert und auf den Motor über eine entsprechende Leitung überträgt und gegebenenfalls Informationen über den Momentanzustand des Motors enthaltende Signale aufnimmt, in einem eigenen Gehäuse am Gehäuse des Motors befestigt ist und wenigstens einen Eingang für das externe Befehlssignal und eine Versorgungsspannung zur Erzeugung des Treiberstromes aufweist.

Derartige gesteuerte Motoren finden sich zahlreich in größeren Maschinen und Anlagen, in denen die Motore durch eine übergeordnete Steuerung definierte Antriebsaufgaben wahrnehmen müssen.

Solche Motore sind insbesondere Stellmotore und drehzahlgesteuerte Motore, die Werkzeuge o. dgl. positionieren und für bestimmte Aufgaben definiert antreiben. In üblicher Technik werden die entsprechenden Steuerungen für die Motore in Schaltschränken untergebracht. Von den Schaltschränken werden die der aktuellen Aufgabe entsprechenden Antriebsströme auf die Motore übertragen und regelmäßig Informationen über den Momentanzustand des Motors auf den Schaltschrank und die darin enthaltene übergeordnete Steuerung zurückgeleitet, wodurch eine Regelung möglich ist. Auf den Verbindungsleitungen zwischen dem Motor und dem zugehörigen Schaltschrank werden daher die Leistungsströme für die Motorwicklungen, wie auch in der Regel digitale Signale von Rotorlagegebern, Tachogeneratoren oder anderen Impulsgebern übertragen. Häufig werden die Leistungsströme ebenfalls in Impulsform übertragen, wenn beispielsweise eine Pulsfolgemodulation oder eine Pulsbreitenmodulation für die Dosierung der dem Motor zugeführten Leistung gewählt wird. Durch die Übertragung der verschiedenen Impulssignale entstehen hochfrequente Störsignale, die sowohl die Leistungssteuerung als auch die Meßinformationen verfälschen können. Es ist daher notwendig, aufwendige Abschirmungs- und Schaltmaßnahmen vorzunehmen, um Einkoppelungen von Störungen in die Leitungen zu vermeiden.

In den Steuerungen für die Motore entsteht in den Leistungssteuerelementen, meist Leistungsschalttransistoren, Verlustwärme, die etwa proportional einiger Prozente der aufgenommenen elektrischen Leistungen der angesteuerten Motore ist. Bei leistungsstarken Antrieben und größeren Anlagen können dadurch im Schaltschrank Wärmemengen im Bereich einiger Kilowatt entstehen, die dann über umfangreiche und teure Kühleinrichtungen abgeführt werden müssen. Der hierdurch entstehende Aufwand wird noch vergrößert, wenn die Schaltelemente im Schaltschrank vor Staubeinwirkungen geschützt werden müssen, beispielsweise bei dem Betrieb von Holzbearbeitungsmaschinen.

Es ist bekannt, den Steuerungen in den Schaltschränken Befehlssignale durch eine Leitzentrale zu übermitteln. Die Befehlssignale enthalten Fahrinformationen für die einzelnen Motore. Gegebenenfalls können über diese Leitungen auch Betriebsparameter des Motors, Störmeldungen usw. auf die Leitzentrale übermittelt werden.

Durch die DE-A-36 42 727 ist eine Unterwasser-Motorpumpe bekannt, deren Motor einen Frequenzumrichter aufweist, der in einer wasserdichten und druckfesten Kapsel innerhalb des Motorgehäuses untergebracht ist. Der Frequenzumrichter ist auf eine bestimmte Drehzahl oder ein Drehmoment des Motors vorprogrammiert. Diese Programmierung soll durch eine mechanische Verformung der Kapsel des Frequenzumrichters oder durch Einwirkung mit einem Elektromagneten von außen umprogrammierbar sein. Ein derartiger Motor ist nicht für die Verwendung in größeren Maschinen und Anlagen vorgesehen und geeignet, in denen die Motore durch eine übergeordnete Steuerung definierte Antriebsaufgaben wahrnehmen müssen. Seine spezielle konstruktive Ausgestaltung ist auf den Unterwassereinsatz abgestellt.

Ein gesteuerter Motor der eingangs erwähnten Art ist durch US-A-4 808 865 bekannt. Dabei ist an einem Motorgehäuse ein Gehäuse einer Steuerung durch Anschrauben flächig verbunden. Die Steuerung faßt einen Eingang für eine Versorgungsspannung und einen Eingang für ein externes Steuersignal auf.

Der Erfindung liegt die Aufgabe zugrunde, gesteuerte Motore der eingangs erwähnten Art so auszubilden, daß der Betrieb störungsfrei und mit geringem Aufwand möglich ist.

Diese Aufgabe wird mit einem gesteuerten Motor der eingangs erwähnten Art dadurch gelöst, daß das Gehäuse der Steuerung mechanisch entkoppelt und wärmeisolierend an dem Gehäuse des Motors dadurch befestigt ist, daß das Gehäuse über einen durch schmale Stege überbrückten Luftzwischenraum mit dem Gehäuse des Motors verbunden ist.

In der erfindungsgemäßen Anordnung ist das Gehäuse der Steuerung mechanisch gekoppelt und wärmeisolierend an dem Gehäuse des Motors befestigt. Dadurch wird erreicht, daß vom Motor erzeugte Erschütterungen und Wärme nur in reduzierter Form auf die diesbezüglich empfindlichen Bauelemente der Steuerung übertragen werden.

Der erfindungsgemäße Motor eignet sich insbesondere für den Einsatz in Anlagen mit einer Vielzahl derartiger Motore, in denen der Steuerung ein externes Befehlssignal zugeführt wird, das die Soll-Betriebsparameter für den Motor für den jeweiligen Fahrauftrag, beispielsweise zum Zustellen eines Werkzeugs in eine bestimmte Position, enthält. Aus dem Fahrauftrag generiert die intelligente Steuerung den Treiberstrom für den Motor in an sich bekannter Technik und überträgt den Treiberstrom auf einer extrem kurzen Leitung auf den benachbarten Motor.

Es ist ohne weiteres ersichtlich, daß durch die erfindungsgemäße Anordnung nur geringfügige Risiken für Störeinflüsse bestehen, so daß Abschirmungs- und Störbeseitigungsmaßnahmen minimiert werden können. In der heutigen Schaltungstechnik läßt sich die Steuerung auf einem solch kleinen Raum realisieren, daß das Gehäuse für die Steuerung in günstiger Weise am Gehäuse des Motors angebracht werden kann, beispielsweise in axialer Verlängerung des zylindrischen Gehäuses des Motors.

An den wenigstens einen Eingang der Steuerung für das externe Befehlssignal ist vorzugsweise eine Datenleitung einer übergeordneten Steuerung angeschlossen. In diesem Fall kann über die Datenleitung der Fahrbefehl und gegebenenfalls die für den Fahrbefehl noch erforderlichen Parameter übertragen werden. Über diese Datenleitung können zugleich Informationen über Betriebsparameter des Motors und etwaige Störungen auf die übergeordnete Steuerung übermittelt werden.

In einer alternativen Ausführungsform oder ergänzend kann der gesteuerte Motor unabhängig von einer übergeordneten Steuerung betrieben werden, wenn ein Eingang für das externe Befehlssignal als manuelle Eingabevorrichtung ausgebildet ist, so daß ein Fahrauftrag unmittelbar am Motor selbst eingegeben werden kann. In diesem Fall ist es zweckmäßig, wenn an der Eingabevorrichtung Informationen über den momentanen Zustand des Motors, insbesondere über etwaige Störungen, ablesbar sind.

Im Falle der Verbindung des Motors mit einer übergeordneten Steuerung über eine Datenleitung kann die Datenleitung auch in Form einer Versorgungsleitung für die Generierung des Treiberstroms realisiert sein. Die Daten können auf der Versorgungsspannung in an sich bekannter Schaltungstechnik übertragen werden.

Obwohl in dem Gehäuse der Steuerung nur die Leistungssteuerelemente für einen Motor untergebracht sind, ist es insbesondere für leistungsstarke Antriebe häufig erforderlich, eine Zwangskühlung für die Steuerung vorzusehen. Bei leistungsstarken Antrieben sind die Motore regelmäßig mit einem eigenen Kühlungsventilator ausgestattet. Dieser kann mit der Motordrehzahl direkt gekoppelt sein. In einer sehr zweckmäßigen Ausführungsform weist das Gehäuse der Steuerung mit dem Kühlungsventilator des Motors kommunizierende Lüftungsöffnungen auf, so daß der Kühlungsventilator des Motors zugleich für die Kühlung der Steuerung ausgenutzt wird. Da die Steuerung Verlustwärme in der Größenordnung von nur wenigen Prozent der Verlustwärme des Motors erzeugt, ist diese zusätzliche Wärmebelastung für den Kühlungsventilator vernachlässigbar.

In einer besonders vorteilhaften Ausführungsform ist die Drehzahl des Kühlungsventilators durch die Prozessorstufe der Steuerung in Abhängigkeit von der Leistungsaufnahme des Motors - vorzugsweise durch eine Temperaturmessung am Motor, insbesondere an den Motorwicklungen - steuerbar. Wird der Motor häufig im Teillastbereich gefahren, kann hierdurch die Geräuschbelästigung durch den Motor, die im wesentlichen durch den Kühlungsventilator verursacht wird, erheblich reduziert werden.

In vielen Fällen, insbesondere wenn die Motore keine eigene Kühlung haben, wird es zweckmäßig sein, wenn die Steuerung mit einem eigenen Kühlungsventilator versehen ist. Der Kühlungsventilator kann in einer geschickten Anordnung in dem Luftzwischenraum zwischen dem Motor und der Steuerung angeordnet sein.

Die Leistungssteuerelemente der Steuerung sind vorzugsweise auf einer wärmeleitenden Wand des Gehäuses der Steuerung montiert, die nicht dem Gehäuse des Motors benachbart ist, so daß es vermieden wird, daß wärmeabstrahlende Wände der beiden Gehäuse einander gegenüberliegen.

Der Kühlungsventilator der Steuerung ist mit seiner Drehachse vorzugsweise in der Längsachse der im allgemeinen zylindrischen Gehäuse angeordnet. Dabei kann der Kühlungsventilator an der dem Motor abgewandten Seite des Gehäuses der Steuerung angeordnet sein, wobei dann die Leistungssteuerelemente auf der dem Kühlungsventilator benachbarten Wand, also abgewandt von dem Gehäuse des Motors, montiert sind.

Der erfindungsgemäße gesteuerte Motor läßt sich auch explosionsgeschützt ausbilden, da die Gehäuse von Motor und Steuerung sowie die Leitungsverbindungen zwischen den beiden Gehäusen ohne Schwierigkeiten druckgekapselt ausgeführt sein können.

Die Erfindung soll im folgenden anhand von in der Zeichnung dargestellten Ausführungsbeispielen näher erläutert werden. Es zeigen:
- Figur 1 -: eine Seitenansicht eines Motors mit einem über einen Luftzwischenraum angesetzten Gehäuse, wobei sich ein Kühlungsventilator in dem Luftzwischenraum befindet
- Figur 2 -: eine Seitenansicht eines Motors mit einem über einen Luftzwischenraum angesetzten Gehäuse und einem Kühlungsventilator an der dem Motor abgewandten Seite des Gehäuses der Steuerung.

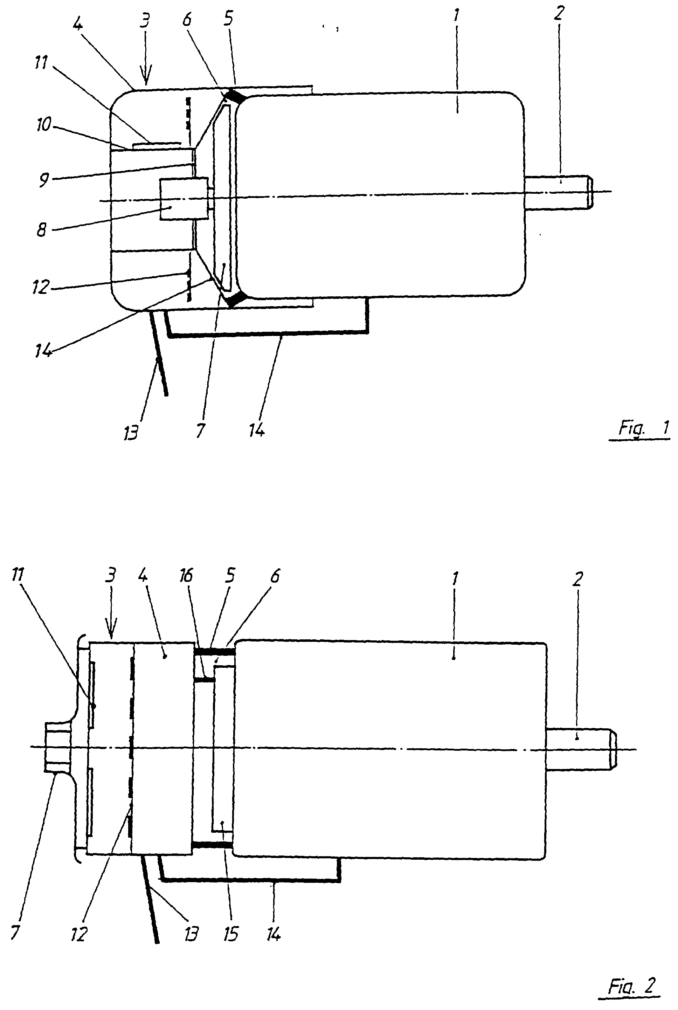

Figur 1 läßt einen Motor 1 mit seiner Abtriebswelle 2 erkennen. An einen derartigen Motor, der ein Gleichstrom-, Wechselstrom- oder Drehstrommotor sein kann, ist eine Steuerung 3 mit einem separaten Gehäuse 4 angesetzt. An dem im wesentlichen zylindrisch ausgebildeten Gehäuse des Motors 1 ist das Gehäuse 4 der Steuerung 3 stirnseitig über schmale Stege 5 so befestigt, daß zwischen dem Gehäuse 4'der Steuerung 3 und dem Motor 1 ein Luftzwischenraum 6 verbleibt. In den Luftzwischenraum ist ein Kühlungsventilator 7 für Steuerung 3 und Motor 1 eingesetzt, dessen Antrieb 8 axial in das Gehäuse 4 der Steuerung 3 hineinragt und dort in an sich bekannter Weise mit Aufhängungen 9 verbunden ist. Das Gehäuse 4 weist axial gerichtete Innenwände 10 auf, die wärmeleitend mit den Außenwänden des Gehäuses 4 verbunden sind und auf denen in Figur 1 angedeutete Leistungstransistoren 11 wärmeableitend befestigt sind. Der Kühlungsventilator 7 kann in dieser Anordnung Luft durch die Steuerung 3 hindurch ansaugen und in bzw. gegen den Motor 1 blasen.

Figur 1 läßt Platinen 12 erkennen, auf denen Prozessoren und sonstige, hinsichtlich ihrer Wärmeerzeugung unkritische Bauelemente angeordnet sind.

Die Versorgungsspannung und Daten von einer Zentral steuerung werden der Steuerung 3 über ein gemeinsames Kabel 13 zugeführt. Die Übertragung des von den Leistungstransistoren 11 generierten Treiberstroms auf den Motor 1 erfolgt über ein kurzes Verbindungskabel 14.

Stromaufwärts vom Ventilator 7 sind trichterförmige Leitwände 14 des Gehäuses 4 vorgesehen, die für ein radiales Abblasen der Kühlluft sorgen.

Bei der in Figur 2 dargestellten Ausführungsform befindet sich der Kühlungsventilator 7' nicht in dem Luftspalt 6 zwischen dem Motor 1 und dem Gehäuse 4 der Steuerung 3 sondern jenseits von der dem Motor 1 abgewandten Stirnwand;des Gehäuses 4 der Steuerung 3, allerdings auch in axialer Anordnung zur Längsachse des Gehäuses des Motors 1 und des Gehäuses 4 der Steuerung 3. Dementsprechend sind die Leistungstransistoren 11 an der vom Ventilator 7' angeblasenen Stirnwand des Gehäuses 4 unmittelbar befestigt.

Figur 2 läßt noch einen in den Luftspalt 6 ragenden Rotorlagegeber 15 und ein Signalkabel 16 zwischen Motor 1 und Steuerung 3 erkennen, über das Zustandsinformationen des Motors 1, beispielsweise das Ausgangssignal eines Temperatursensors für die Motorwicklungen auf die Steuerung 3 übertragbar sind. Diese Informationen können gegebenenfalls über die Leitung 13 an die Zentralsteuerung weitergeleitet werden.

## Patentansprüche

1. Gesteuerter Motor (1) mit einer Steuerung (3), die mit einer Prozessorstufe und Leistungssteuerelementen (11) den Treiberstrom für die Motorwicklungen in Abhängigkeit von wenigstens einem der Steuerung (3) zugeführten externen Befehlssignal generiert und auf den Motor (1) über eine entsprechende Leitung (14) überträgt und gegebenenfalls Informationen über den Momentzustand des Motors (1) enthaltende Signale aufnimmt, in einem eigenen Gehäuse (4) am Gehäuse des Motors (1) befestigt ist und wenigstens einen Eingang für das externe Befehlssignal und eine Versorgungsspannung zur Erzeugung des Treiberstromes aufweist, **dadurch gekennzeichnet, daß** das Gehäuse (4) der Steuerung (3) mechanisch entkoppelt und wärmeisolierend an dem Gehäuse des Motors (1) dadurch befestigt ist, daß das Gehäuse (4) über einen durch schmale Stege (5) überbrückten Luftzwischenraum (6) mit dem Gehäuse des Motors (1) verbunden ist.

2. Motor nach Anspruch 1, dadurch gekennzeichnet, daß an den wenigstens einen Eingang für das externe Befehlssignal eine Datenleitung (13) einer übergeordneten Steuerung angeschlossen ist.

3. Motor nach Anspruch 1 oder 2, dadurch gekennzeichnet, daß der wenigstens eine Eingang für das externe Befehlssignal als manuelle Eingabevorrichtung ausgebildet ist.

4. Motor nach Anspruch 3, dadurch gekennzeichnet, daß an der Eingabevorrichtung Informationen über den momentanen Zustand des Motors (1) ablesbar sind.

5. Motor nach Anspruch 2, dadurch gekennzeichnet, daß eine Zuleitung (13) für die Versorgungsspannung zur Erzeugung des Treiberstroms als Datenleitung dient.

6. Motor nach einem der Ansprüche 1 bis 5, dadurch gekennzeichnet, daß der Motor (1) einen Kühlungsventilator und das Gehäuse mit dem Kühlungsventilator kommunizierende Lüftungsöffnungen aufweist.

7. Motor nach einem der Ansprüche 1 bis 6, dadurch gekennzeichnet, daß in dem Luftzwischenraum (6) ein Kühlungsventilator (7) angeordnet ist.

8. Motor nach einem der Ansprüche 1 bis 7, dadurch gekennzeichnet, daß die Leistungssteuerelemente (11) auf einer wärmeleitenden Wand (10) des Gehäuses (4) der Steuerung (3) montiert sind, die nicht dem Gehäuse des Motors (1) benachbart ist.

9. Motor nach einem der Ansprüche 1 bis 8, dadurch gekennzeichnet, daß das Gehäuse (4) der Steuerung (3) das etwa zylindrische Gehäuse des Motors (1) im wesentlichen axial fortsetzt.

10. Motor nach Anspruch 9, dadurch gekennzeichnet, daß der Kühlungsventilator (7, 7') mit seiner Drehachse in der Längsachse der Gehäuse (1, 4) angeordnet ist.

11. Motor nach einem der Ansprüche 1 bis 10, dadurch gekennzeichnet, daß der Kühlungsventilator (7') an der dem Motor abgewandten Seite des Gehäuses (4) der Steuerung (3) angeordnet ist und daß an der dem Kühlungsventilator (7') benachbarten Wand die Leistungssteuerelemente (11) montiert sind.

12. Motor nach einem der Ansprüche 1 bis 11, dadurch gekennzeichnet, daß die Drehzahl des Kühlungsventilators (7, 7') durch die Prozessorstufe der Steuerung (3) in Abhängigkeit von der Leistungsaufnahme des Motors (1) steuerbar ist.

13. Motor nach Anspruch 12, dadurch gekennzeichnet, daß der Prozessorstufe ein Ausgangssignal eines Temperatursensors für den Motor zuführbar ist.

14. Motor nach einem der Ansprüche 1 bis 13, dadurch gekennzeichnet, daß die Gehäuse (1, 4) und die Leitungsverbindungen (14, 16) der beiden Gehäuse (1, 4) druckgekapselt explosionsgeschützt ausgeführt sind.

## Claims

1. Controlled motor (1) having a controller (3), which by means of a processor module and power control elements (11) generates the driver current for the motor windings in dependence on at least one external command signal supplied to the controller (3) and transmits said current to the motor (1) via a suitable line (14) and optionally receives signals containing information about the instantaneous state of the motor (1), is fastened in its own housing (4) to the housing of the motor (1) and has at least one input for the external command signal and a supply voltage for generating the driver current, **characterized in that** the housing (4) of the controller (3) is fastened in a mechanically decoupled and heat-insulating manner to the housing of the motor (1) in that the housing (4) is connected to the housing of the motor (1) by an air gap (6) bridged by narrow webs (5).

2. Motor according to claim 1, characterized in that a data line (13) of a higher-level control is connected to the at least one input for the external command signal.

3. Motor according to claim 1 or 2, characterized in that the at least one input for the external command signal takes the form of a manual input device.

4. Motor according to claim 3, characterized in that information about the instantaneous state of the motor (1) may be read at the input device.

5. Motor according to claim 2, characterized in that a supply line (13) for the supply voltage for generating the driver current is used as a data line.

6. Motor according to one of claims 1 to 5, characterized in that the motor (1) has a cooling fan and the housing has ventilation openings which communicate with the cooling fan.

7. Motor according to one of claims 1 to 6, characterized in that a cooling fan (7) is disposed in the air gap (6).

8. Motor according to one of claims 1 to 7, characterized in that the power control elements (11) are mounted on a heat-conducting wall (10) of the housing (4) of the controller (3) which is not adjacent to the housing of the motor (1).

9. Motor according to one of claims 1 to 8, characterized in that the housing (4) of the controller (3) is substantially an axial continuation of the approximately cylindrical housing of the motor (1).

10. Motor according to claim 9, characterized in that the cooling fan (7, 7') is disposed with its axis of rotation in the longitudinal axis of the housings (1, 4).

11. Motor according to one of claims 1 to 10, characterized in that the cooling fan (7') is disposed at the side of the housing (4) of the controller (3) remote from the motor and that the power control elements (11) are mounted on the wall adjacent to the cooling fan (7').

12. Motor according to one of claims 1 to 11, characterized in that the rotational speed of the cooling fan (7, 7') is controllable by the processor module of the controller (3) as a function of the power input of the motor (1).

13. Motor according to claim 12, characterized in that an output signal of a temperature detector for the motor may be supplied to the processor module.

14. Motor according to one of claims 1 to 13, characterized in that the housings (1, 4) and the line connections (14, 16) of the two housings (1, 4) are explosion-protected in a pressure-enclosed manner.

## Revendications

1. Moteur piloté (1) comportant une commande (3), qui au moyen d'un étage processeur et d'éléments de commande de puissance (11) génère le courant de fonctionnement pour les enroulements moteurs en fonction d'au moins un signal de consigne externe fourni à la commande (3) et transmet ce courant au moteur (1) par l'intermédiaire d'une ligne conductrice correspondante (14), et le cas échéant reçoit des signaux contenant des informations sur l'état instantané du moteur (1), est fixé dans un boîtier propre (4) sur le boîtier du moteur (1) et présente au moins une entrée pour le signal de consigne externe et une tension d'alimentation pour produire le courant de fonctionnement, caractérisé en ce que le boîtier (4) de la commande (3) est fixé au boîtier du moteur (1) d'une manière mécaniquement découplée et thermiquement isolante consistant en ce que le boîtier (4) est relié au boîtier du moteur (1) par l'intermédiaire d'un intervalle d'air franchi par des ponts étroits (5).

2. Moteur selon la revendication 1, caractérisé en ce qu'à la dite "au moins une" entrée pour le signal de consigne externe est raccordée une ligne de données (13) d'une commande hiérarchiquement supérieure.

3. Moteur selon la revendication 1 ou 2, caractérisé en ce que la dite "au moins une" entrée pour le signal de consigne externe est réalisée sous la forme d'un dispositif d'entrée manuelle.

4. Moteur selon la revendication 3, caractérisé en ce que des informations sur l'état instantané du moteur (1) sont lisibles sur le dispositif d'entrée.

5. Moteur selon la revendication 2, caractérisé en ce qu'une ligne d'amenée (13) pour la tension d'alimentation destinée à la production du courant de fonctionnement sert de ligne de données.

6. Moteur selon l'une des revendications 1 à 5, caractérisé en ce que le moteur (1) présente un ventilateur de refroidissement et le boîtier présente des ouies de ventilation communiquant avec le ventilateur de refroidissement.

7. Moteur selon l'une des revendications 1 à 6, caractérisé en ce qu'un ventilateur de refroidissement (7) est disposé dans l'intervalle d'air (6).

8. Moteur selon l'une des revendications 1 à 7, caractérisé en ce que les éléments de commande de puissance (11) sont montés sur une paroi thermiquement conductrice (10) du boîtier (4) de la commande (3), qui n'est pas voisine du boîtier du moteur (1).

9. Moteur selon l'une des revendications 1 à 8, caractérisé en ce que le boîtier (4) de la commande (3) prolonge sensiblement axialement le boîtier à peu prés cylindrique du moteur (1).

10. Moteur selon la revendication 9, caractérisé en ce que le ventilateur de refroidissement (7, 7') est agencé avec son axe de rotation dans l'axe longitudinal du boîtier (1, 4).

11. Moteur selon l'une des revendications 1 à 10, caractérisé en ce que le ventilateur de refroidissement (7') est disposé du côté du boîtier (4) de la commande (3) qui est opposé au moteur, et en ce que les éléments de commande de puissance (11) sont montés sur la paroi avoisinant le ventilateur de refroidissement (7').

12. Moteur selon l'une des revendications 1 à 11, caractérisé en ce que la vitesse de rotation du ventilateur de refroidissement (7, 7') est pilotable par l'étage processeur de la commande (3) en fonction de la consommation de puissance du moteur (1).

13. Moteur selon la revendication 12, caractérisé en ce qu'un signal de sortie d'un détecteur de la température du moteur peut être fourni à l'étage processeur.

14. Moteur selon l'une des revendication 1 à 13, caractérisé en ce que les boîtiers (1, 4) et les raccordements de lignes conductrices (14, 16) des deux boîtiers (1, 4) sont réalisés encapsulés sous pression et protégés à l'égard des explosions.
